# EUROPÄISCHE PATENTSCHRIFT

(11) **EP 1 337 569 B1**
(45) Veröffentlichungstag und Bekanntmachung des Hinweises auf die Patenterteilung: **09.01.2008**
(21) Anmeldenummer: 01969761.4
(22) Anmeldetag: 24.09.2001
(51) Int. Cl.: C08F 279/02, C08L 51/04

(54) **VERBESSERTE ELASTISCH-THERMOPLASTISCHE PFROPFPOLYMERISATE FÜR DIE HERSTELLUNG KAUTSCHUKMODIFIZIERTER THERMOPLASTISCHER FORMMASSEN**
IMPROVED ELASTIC-THERMOPLASTIC GRAFT POLYMERS FOR THE PRODUCTION OF RUBBER-MODIFIED THERMOPLASTIC MOULDING MATERIALS
POLYMERES GREFFES ELASTO-THERMOPLASTIQUES AMELIORES, DESTINES A LA PRODUCTION DE MATIERES A MOULER THERMOPLASTIQUES MODIFIEES PAR CAOUTCHOUC

(30) Priorität: 06.10.2000 DE 10049467
(43) Veröffentlichungstag der Anmeldung: 27.08.2003
(73) Patentinhaber: LANXESS Deutschland GmbH, 51369 Leverkusen (DE)
(72) Erfinder: EICHENAUER, Herbert, 41539 Dormagen (DE); GASCHE, Hans-Erich, 51519 Odenthal (DE); JANSEN, Ulrich, 41541 Dormagen (DE)
(86) Internationale Anmeldenummer: PCT/EP2001/011011
(87) Internationale Veröffentlichungsnummer: WO 2002/031008

(56) Entgegenhaltungen:
- US-A- 4 877 844

## Beschreibung

Gegenstand der Erfindung sind verbesserte elastisch-thermoplastische Pfropfpolymerisate, die durch Emulsionspolymerisation unter Einhaltung spezieller Reaktionsbedingungen bei der Zugabe molekulargewichtsregelnder Verbindungen erhalten werden sowie darauf basierende thermoplastische Zusammensetzungen und Formkörper, sowie ein Verfahren zur Herstellung der elastisch-thermoplastischen Pfropfpolymerisate.

Die Herstellung von elastisch-thermoplastischen Pfropfpolymerisaten, z.B. von Pfropfkautschuken aus Vinylmonomeren und Kautschuken durch Emulsionspolymerisation ist bekannt und in zahlreichen Patentschriften, z.B. der EP-A 154 244, beschrieben.

Dabei werden zur Verbesserung der Pfropfpolymerisateigenschaften in Hinblick auf günstigere Verarbeitungsbedingungen daraus hergestellter thermoplastischer Formmassen bei der Pfropfpolymerisationsreaktion oft eine oder mehrere molekulargewichtsregelnde Verbindungen zugesetzt.

Nachteilig hierbei sind die hohen Kosten der molekulargewichtsregelnden Verbindungen sowie das nicht immer optimale Einbauverhalten dieser Komponenten.

Es bestand daher die Aufgabe, elastisch-thermoplastische Pfropfpolymerisate für die Herstellung thermoplastischer Formmassen zur Verfügung zu stellen, bei denen die molekulargewichtsregelnde Verbindung bei gegebener Einsatzmenge eine optimale Wirksamkeit bei sehr hoher Einbaurate aufweist.

Gegenstand der Erfindung sind elastisch-thermoplastische Pfropfpolymerisate erhalten durch radikalische Polymerisation eines vinylgruppenhaltigen Monomeren oder mehrerer solcher Monomerer und mindestens einer molekulargewichtsregelnden Verbindung in Gegenwart mindestens eines in Latexform vorliegenden Kautschuks, dadurch gekennzeichnet, dass während der Pfropfpolymerisationsreaktion ein Gemisch aus Monomer(en) (M) und molekulargewichtsregelnder Verbindung (MGR) derart zum Kautschuklatex gegeben wird, dass das Gewichtsverhältnis M:MGR in einem ersten Reaktionsabschnitt (RA) 50:1 bis 400:1, vorzugsweise 75:1 bis 350:1 und besonders bevorzugt 100:1 bis 300:1, in einem zweiten Reaktionsabschnitt 100:1 bis 800:1, vorzugsweise 150:1 bis 700:1 und besonders bevorzugt 200:1 bis 600:1 und in einem dritten Reaktionsabschnitt 200:1 bis 2000:1, vorzugsweise 300:1 bis 1800:1 und besonders bevorzugt 400:1 bis 1500:1 beträgt, in mindestens einem weiteren Reaktionsabschnitt zu Beginn und/oder am Ende der Pfropfpolymerisationsreaktions, vorzugsweise am Ende der Pfropfpolymerisationsreaktion, nur Monomere ohne Zusatz molekulargewichtsregelnder Verbindungen zum Kautschuklatex gegeben werden und die Bedingung M:MGR (erster RA) ≤ M:MGR (zweiter RA) < M:MGR (dritter RA) erfüllt ist.

Dabei beträgt die Dauer der drei aufeinanderfolgenden Reaktionsabschnitte vorzugsweise 10 bis 80 %, besonders bevorzugt 15 bis 70 % und ganz besonders bevorzugt 20 bis 60 % (erster Reaktionsabschnitt), vorzugsweise 5 bis 60 %, besonders bevorzugt 10 bis 50 % und ganz besonders bevorzugt 15 bis 40 % (zweiter Reaktionsabschnitt) und vorzugsweise 10 bis 50 %, besonders bevorzugt 15 bis 45 % und ganz besonders bevorzugt 20 bis 40 % (dritter Reaktionsabschnitt) (jeweils bezogen auf die gesamte Reaktionszeit der drei Reaktionsabschnitte); die Dauer des Reaktionsabschnittes ohne Zusatz molekulargewichtsregelnder Verbindungen zu Beginn und/oder am Ende der Pfropfpolymerisationsreaktion beträgt vorzugsweise 5 bis 50 %, besonders bevorzugt 10 bis 45 % und ganz besonders bevorzugt 15 bis 40 % (bezogen auf die Gesamtreaktionszeit der Pfropfpolymerisation).

Gegenüber den bisher bekannten elastisch-thermoplastischen Pfropfpolymerisaten zeichnen sich die erfindungsgemäßen Polymerisate durch verbesserte Verarbeitbarkeit und höhere Zähigkeit darauf basierender kautschukmodifizierter thermoplastischer Formmassen, z.B. vom ABS-Typ, aus.

Als Kautschuke zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C.

Verwendet werden können z.B.
- Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren, z.B. und bevorzugt Acrylnitril, Methacrylnitril, Styrol, α-Methylstyrol, Halogenstyrole, C₁-C₄-Alkylstyrole, C₁-C₈-Alkylacrylate, C₁-C₈-Alkylmethacrylate, Alkylenglykoldiacrylate, Alkylenglykol-dimethacrylate, Divinylbenzol;
- Acrylatkautschuke, d.h. Homo- und Copolymerisate von C₁-C₁₀-Alkylacrylaten, z.B. und bevorzugt Homopolymerisate von Ethylacrylat, Butylacrylat oder Copolymerisate mit bis zu 40 Gew.-%, bevorzugt nicht mehr als 10 Gew.-% Vinylmonomeren, z.B. und bevorzugt Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. und bevorzugt Divinylbenzol, Triallylcyanurat.

Bevorzugt sind Polybutadienkautschuke, SBR-Kautschuke mit bis zu 30 Gew.-% einpolymerisiertem Styrol oder Acrylatkautschuke, besonders solche, die eine Kern-Schalen-Struktur aufweisen, z.B. wie in DE-A 3 006 804 beschrieben, oder Mischungen aus den genannten Kautschuken.

Zur Herstellung der erfindungsgemäßen Pfropfpolymerisate kommen Latices mit mittleren Teilchendurchmessern d₅₀ von 0,05 bis 2 µm, vorzugsweise von 0,08 bis 1 µm und besonders bevorzugt von 0,1 bis 0,5 µm, in Betracht. Die Gelgehalte der eingesetzten Kautschuke können in weiten Grenzen variiert werden, vorzugsweise liegen sie zwischen 30 und 95 Gew.-% (Bestimmung nach der Drahtkäfigmethode in Toluol (vgl. Houben-Weyl, Methoden der Organischen Chemie, Makromolekulare Stoffe, Teil 1, S.307 (1961), Thieme Verlag Stuttgart)).

Ganz besonders bevorzugt sind Mischungen von Kautschuklatices mit
a) mittleren Teilchendurchmessern d₅₀ ≤320 nm, vorzugsweise 260 bis 310 nm, und Gelgehalten ≤70 Gew.-%, vorzugsweise 40 bis 65 Gew.-% und
b) mittleren Teilchendurchmessern d₅₀ ≥370 nm, vorzugsweise 380 bis 450 nm, und Gelgehalten ≥70 Gew.-%, vorzugsweise 75 bis 90 Gew.-%.

Dabei hat der Kautschuklatex (a) vorzugsweise eine Breite der Teilchengrößenverteilung von 30 bis 100 nm, besonders bevorzugt von 40 bis 80 nm, der Kautschuklatex (b) von 50 bis 500 nm, besonders bevorzugt von 100 bis 400 nm (jeweils gemessen als d₉₀-d₁₀-Wert aus der integralen Teilchengrößenverteilung).

Die Mischungen enthalten die Kautschuklatices (a) und (b) vorzugsweise im Gewichtsverhältnis 90:10 bis 10:90, besonders bevorzugt 60:40 bis 30:70 (jeweils bezogen auf den jeweiligen Feststoffanteil der Latices).

Die mittleren Teilchendurchmesser werden mittels Ultrazentrifuge (vgl. W. Scholtan, H. Lange : Kolloid-Z. u Z. Polymere 250, S. 782-796 (1972) bestimmt.

Die verwendeten Kautschuklatices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-A 0 029 613; EP-A 0 007 810; DD-A 144 415; DE-A 12 33 131; DE-A 12 58 076; DE-A 21 01 650; US-A 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Als Emulgatoren können die üblichen anionischen Emulgatoren wie Alkylsulfate, Alkylsulfonate, Aralkylsulfonate, Seifen gesättigter oder ungesättigter Fettsäuren (z.B. Ölsäure, Stearinsäure) sowie alkalischer disproportionierter oder hydrierter Abietin- oder Tallölsäure verwendet werden, vorzugsweise werden Emulgatoren mit Carboxylgruppe (z.B. Salze von C₁₀-C₁₈-Fettsäuren, disproportionierte Abietinsäure, Emulgatoren gemäß DE-A 36 39 904 und DE-A 39 13 509) eingesetzt.

Prinzipiell kann man Kautschukpolymerisatlatices auch herstellen durch Emulgieren von fertigen Kautschukpolymerisaten in wässrigen Medien (vgl. japanische Patentanmeldung JP-A 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische, 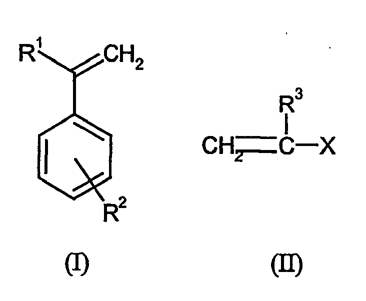 in welchen
- R¹: Wasserstoff oder Methyl,
- R²: Wasserstoff, Halogen oder Alkyl mit 1 bis 4 Kohlenstoffatomen in ortho-, meta- oder para-Stellung,
- R³: Wasserstoff oder Methyl
und
- X: CN, R⁴OOC oder R⁵R⁶NOC darstellt,
worin
R⁴ Wasserstoff oder Alkyl mit 1 bis 4 Kohlenstoffatomen;
und
R⁵ und R⁶ unabhängig voneinander Wasserstoff, Phenyl oder Alkyl mit 1 bis 4 Kohlenstoffatomen bedeuten.

Beispiele für Verbindungen der Formel (I) sind Styrol, α-Methylstyrol, p-Methylstyrol und Vinyltoluol. Verbindungen der Formel (II) sind Acrylnitril und Methylmethacrylat. Weitere prinzipiell geeignete Monomere sind z.B. und bevorzugt Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropfpolymerisate sind solche, die durch Pfropfpolymerisation von Styrol und Acrylnitril im Gew.-Verhältnis 90:10 bis 50:50, vorzugsweise 80:20 bis 65:35 (wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, dass Pfropfpolymerisate mit Kautschukgehalten von 30 bis 80 Gew.-%, vorzugsweise 35 bis 75 Gew.-% und besonders bevorzugt 35 bis 70 Gew.-% resultieren.

Als Initiatoren kommen anorganische und organische Peroxide, z.B. und bevorzugt H₂O₂, Di-tert.-Butylperoxid, Cumolhydroperoxid, Dicyclohexylpercarbonat, p-Menthanhydroperoxid, tert.-Butylhydroperoxid, Azoinitiatoren wie z.B. und bevorzugt Azobisisobutyronitril, anorganische Persalze wie Kaliumperoxodisulfat, Natriumperoxodisulfat, Ammoniumperoxodisulfat, Kaliumperphosphat, Natriumperborat sowie Redox-Systeme in Betracht, die sich aus einem -in der Regel organischen - Oxidationsmittel und einem Reduktionsmittel zusammensetzen, wobei im Reaktionsmedium zusätzlich Schwermetallionen vorhanden sein können (siehe H. Logemann in Houben-Weyl, Methoden der organischen Chemie, Bd. 14/1, S. 263-297).

Bevorzugte Initiatoren sind Kaliumperoxodisulfat, Natriumperoxodisulfat, Ammoniumperoxodisulfat oder Mischungen daraus sowie Cumolhydroperoxid, p-Menthanhydroperoxid, tert.-Butylhydroperoxid oder Mischungen daraus.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan(III)-salze wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit C).

Die Reaktionstemperatur bei der Herstellung der erfindungsgemäßen Pfropfpolymerisate kann in weiten Grenzen variiert werden. Sie beträgt im allgemeinen 25°C bis 160°C, vorzugsweise 40°C bis 90°C und besonders bevorzugt 50°C bis 85°C. Dabei wird die Pfropfpolymerisation vorzugsweise so durchgeführt, dass der Temperaturunterschied zwischen Beginn und Ende der Reaktion mindestens 10°C, besonders bevorzugt mindestens 15°C und ganz besonders bevorzugt mindestens 20°C beträgt.

Zusammen mit den Pfropfmonomeren werden bei der Herstellung der erfindungsgemäßen elastisch-thermoplastischen Pfropfpolymerisate 0,01 bis 1,00 Gew.-Teile (pro 100 Gew.-Teile Pfropfmonomer), vorzugsweise 0,03 bis 0,8 Gew.-Teile (pro 100 Gew.-Teile Pfropfmonomer) und besonders bevorzugt 0,06 bis 0,5 Gew.-Teile (pro 100 Gew.-Teile Pfropfmonomer) eines oder mehrerer Mercaptane zugegeben.

Geeignete Mercaptane sind z. B. aliphatische Mercaptane wie Ethyl-, n-Propyl-, n-Butyl-, tert.-Butyl-, n-Pentyl-, n-Hexyl-, n-Octyl-, n-Decyl-, n-Dodecyl-, tert.-Dodecyl-, n-Hexadecyl- und n-Octadecylmercaptan oder aromatische Mercaptane wie Thiophenol. Bevorzugte Mercaptane sind tert.-Dodecyhnercaptan und n-Dodecylmercaptan und deren Gemische.

Prinzipiell können auch andere molekulargewichtsregelnde Substanzen wie z.B. dimeres α-Methylstyrol oder Terpinolen in Mengen von 0,5 bis 5 Gew.-Teilen, vorzugsweise 1 bis 3 Gew.-Teilen (jeweils pro 100 Gew.-Teile Pfropfmonomer) eingesetzt werden.

Zur Herstellung von elastisch-thermoplastischen Pfropfpolymerisaten mit den erfindungsgemäßen verbesserten Eigenschaften muß während der Pfropfpolymerisationsreaktion ein Gemisch aus Monomer(en) (M) und molekulargewichtsregelnder Verbindung (MGR) derart zum Kautschuklatex gegeben werden, dass das Gewichtsverhältnis M : MGR in einem ersten Reaktionsabschnitt (RA) 50:1 bis 400:1, vorzugsweise 75:1 bis 350:1 und besonders bevorzugt 100:1 bis 300:1, in einem zweiten Reaktionsabschnitt 100:1 bis 800:1, vorzugsweise 150:1 bis 700:1 und besonders bevorzugt 200:1 bis 600:1 und in einem dritten Reaktionsabschnitt 200:1 bis 2000:1, vorzugsweise 300:1 bis 1800:1 und besonders bevorzugt 400:1 bis 1500:1 beträgt, in mindestens einem weiteren Reaktionsabschnitt zu Beginn und/oder am Ende der Pfropfpolymerisationsreaktion, vorzugsweise am Ende der Pfropfpolymerisationsreaktion, nur Monomere ohne Zusatz molekulargewichtsregelnder Verbindungen zum Kautschuklatex gegeben werden und die Bedingung M:MGR (erster RA) ≤M:MGR (zweiter RA) < M:MGR (dritter RA) erfüllt ist.

Ein weiterer Gegenstand der vorliegenden Erfindung sind elastisch-thermoplastische Pfropfpolymerisate erhalten unter Verwendung schwefelhaltiger molekulargewichtsregelnder Verbindungen, vorzugsweise Mercaptane, unter Einhaltung der oben beschriebenen Reaktionsbedingungen, gekennzeichnet durch einen nicht homogenen Gehalt an eingebautem Schwefel. Dieser nicht homogene Einbau des Schwefels ist z.B. nachweisbar durch fraktionierte Ausfällung des elastisch-thermoplastischen Pfropfpolymerisats bzw. des nicht aufgepfropften löslichen Polymeranteils und analytische Bestimmung des Schwefelgehaltes an den einzelnen Fraktionen (vgl. M. Hoffmann, H. Krömer, R. Kuhn in Polymeranalytik I, S. 147-168, Thieme Verlag Stuttgart 1977).

Als Emulgator bei der Pfropfpolymerisationsreaktion können die obengenannten Verbindungen eingesetzt werden.

Die erfindungsgemäßen elastisch-thermoplastischen Pfropfpolymerisate besitzen vorzugsweise einen Kautschukgehalt von 30 bis 80 Gew.-%, besonders bevorzugt von 35 bis 75 Gew.-%.

Zur Erzeugung von kautschukmodifizierten thermoplastischen Formmassen wird das erfindungsgemäße, nach üblicher Aufarbeitung (z.B. durch Koagulation mit Salzen und/oder Säuren, Waschen und Trocknen oder durch Sprühtrocknung) vorliegende Pfropfpolymerisat mit mindestens einem kautschukfreien Matrixharz abgemischt.

Als kautschukfreie Copolymerisate werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate mit Anteilen an eingebauten AcrylnitrilEinheiten <30 Gew.-%.

Diese Copolymerisate besitzen vorzugsweise mittlere Molekulargewichte M̅_{w} von 20 000 bis 200 000 (gemessen z.B. durch Gelpermeationschromatographie) bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-AS 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (III) und (IV) 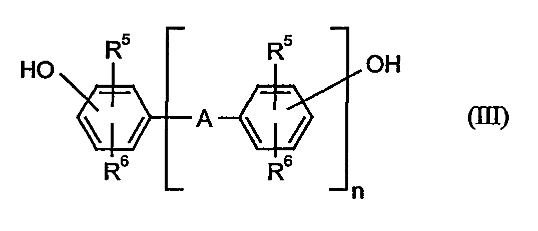 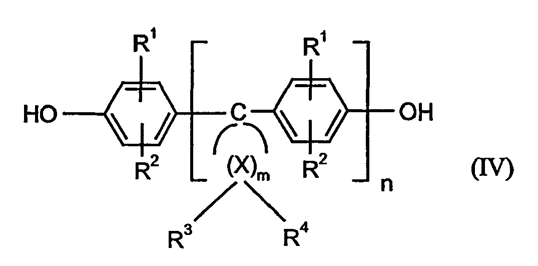 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-himethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (III) und (IV).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-meihanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Zusammensetzungen können weiterhin andere als die erfindungsgemäßen Pfropfpolymerisate enthalten.

Dabei werden die erfindungsgemäßen Pfropfpolymerisate in Mengen von 1 bis 80 Gew.-%, vorzugsweise in Mengen von 5 bis 50 Gew.-%, jeweils bezogen auf die gesamte Zusammensetzung, eingesetzt.

Zur Herstellung der Formmassen kann das erfindungsgemäße elastisch-thermoplastische Pfropfpolymerisat mit dem Matrixharz auf verschiedene Weise gemischt werden. Wird das Matrixharz durch Emulsionspolymerisation hergestellt,so können die Latices gemischt und gemeinsam ausgefällt oder auch getrennt ausgefällt und die resultierenden Festsubstanzen gemischt werden.

Wird z.B. das Matrixharz durch Lösungs- oder Massepolymerisation hergestellt, so muß das Pfropfpolymerisat getrennt ausgefällt werden. Hierzu verwendet man bekannte Verfahren, beispielsweise Zusatz von Salzen und/oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen z.B. Mehrwalzenstühle, Mischextruder oder Innenkneter in Betracht.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

### Beispiele

### Beispiele 1 bis 5

58 Gew.-Teile (gerechnet als Feststoff) eines Polybutadienlatexgemisches (50 Gew.-% mit einem mittleren Teilchendurchmesser d₅₀ von 398 nm und einem Gelgehalt von 83 Gew.-% und 50 Gew.-% mit einem mittleren Teilchendurchmesser d₅₀ von 282 nm und einem Gelgehalt von 58 Gew.-%, beide hergestellt durch radikalische Polymerisation) werden mit Wasser auf einen Feststoffgehalt von ca. 20 Gew.-% gebracht. Danach wird auf 59°C erwärmt und mit 0,5 Gew.-Teilen K₂S₂O₈ (gelöst in Wasser) versetzt. Dann werden innerhalb von 6 Stunden parallel 42 Gew.-Teile eines Monomerengemisches (Gew.-Verhältnis Styrol : Acrylnitril = 73 : 27) und 1,5 Gew.-Teile (gerechnet als Festsubstanz) des Natriumsalzes eines Harzsäuregemisches (Dresinate 731, Abieta Chemie GmbH, Gersthofen), gelöst in alkalisch eingestelltem Wasser, zudosiert.

Zusammen mit dem Monomerengemisch werden 0,12 Gew.-Teile tert.-Dodecylmercaptan als Molekulargewichtsregler derart zudosiert, daß die in Tabelle 1 angegebenen Gewichtsverhältnisse Monomer : Molekulargewichtsregler eingehalten werden.

Die Reaktionstemperatur wird innerhalb der 6 Stunden auf 82°C angehoben, wonach sich eine 4-stündige Nachreaktionszeit bei dieser Temperatur anschließt. Nach Zugabe von ca. 1 Gew.-Teil eines phenolischen Antioxidans wird mit einem Magnesiumsulfat/Essigsäure-Gemisch koaguliert und nach dem Waschen mit Wasser das resultierende Pulver bei 70°C getrocknet.

### Beispiele 6 bis 8

50 Gew.-Teile (gerechnet als Feststoff) eines Polybutadienlatex mit einem mittleren Teilchendurchmesser d₅₀ von 127 nm und einem Gelgehalt von 90 Gew.-% (hergestellt durch radikalische Polymerisation) werden mit Wasser auf einen Feststoffgehalt von ca. 20 Gew.-% gebracht. Danach wird auf 59°C erwärmt und mit 0,5 Gew.-Teilen K₂S₂O₈ (gelöst in Wasser) versetzt. Dann werden innerhalb von 6 Stunden parallel 50 Gew.-Teile eines Monomerengemisches (Gew.-Verhältnis Styrol : Acrylnitril = 73 : 27) und 1,5 Gew.-Teile (gerechnet als Feststoff) des Natriumsalzes eines Harzsäuregemisches (Dresinate 731, Abieta Chemie GmbH, Gersthofen), gelöst in alkalisch eingestelltem Wasser, zudosiert.

Zusammen mit dem Monomerengemisch werden 0,1 Gew.-Teile tert.-Dodecylmercaptan als Molekulargewichtsregler derart zudosiert, daß die in Tabelle 1 angegebenen Gewichtsverhältnisse Monomer : Molekulargewichtsregler eingehalten werden. Die Reaktionstemperatur wird innerhalb der 6 Stunden auf 82°C angehoben, wonach sich eine 4-stündige Nachreaktionszeit bei dieser Temperatur anschließt. Nach Zugabe von ca. 1 Gew.-Teil eines phenolischen Antioxidans wird mit einem Magnesiumsulfat/Essigsäure-Gemisch koaguliert und nach dem Waschen mit Wasser das resultierende Pulver bei 70°C getrocknet.

**Tabelle 1 : Reaktionsbedingungen bei der Herstellung der elastisch-thermoplastischen Pfropfpolymerisate**

| Beispiel Nr. | Reglerfreier Reaktionsabschnitt zu Beginn der Reaktion (Dauer bezogen auf Gesamtreaktionszeit [%]) | Gew.-Verhältnis Monomer : Molekulargewichtsregler 1. Reaktionsabschnitt (Dauer bez. auf Reaktionsabschnitte 1 bis 3 [%]) | Gew.-Verhältnis Monomer: Molekulargewichtsregler 2. Reaktionsabschnitt (Dauer bez. auf Reaktionsabschnitte 1 bis 3 [%]) | Gew.-Verhältnis Monomer : Molekulargewichtsregler 3. Reaktionsabschnitt (Dauer bez. auf Reaktionsabschnitte 1 bis 3 [%]) | Reglerfieier Reaktionsabschnitt am Ende der Reaktion (Dauer bezogen auf Gesamtreaktionszeit [%]) |
|---|---|---|---|---|---|
| 1 | nein | 175 (50) | 233 (25) | 700 (25) | ja (33) |
| 2 | nein | 140 (20) | 233 (40) | 700(40) | ja (17) |
| 3 | ja (8) | 200 (56) | 350 (22) | 560 (22) | ja (17) |
| 4(Vergleich) | nein | 350 (100) | | | nein |
| 5(Vergleich) | nein | 700 (25) | 233 (25) | 175 (50) | ja (33) |
| 6 | nein | 238 (50) | 417 (25) | 833 (25) | ja (33) |
| 7 | ja (17) | 238 (50) | 417 (25) | 833 (25) | ja (17) |
| 8(Vergleich) | nein | 502 (100) | | | nein |

### Ausprüfung der Pfropfpolymerpulver

a) 40 Gew.-Teile der Pfropfpulver erhalten gemäß Beispielen 1 bis 5 werden mit 60 Gew.-Teilen eines Styrol/Acrylnitril = 72:28-Copolymerharzes (M̅_{w} ≈ 115 000), 2 Gew.-Teilen Ethylendiaminbisstearylamid und 0,1 Gew.-Teilen eines Silikonöls in einem Innenkneter vermischt und anschließend zu Prüfkörpern verarbeitet (siehe Tabelle 2).
b) 15 Gew.-Teile der Pfropfpulver erhalten gemäß Beispielen 1 bis 5 und 15 Gew.-Teile der Pfropfpulver erhalten gemäß Beispielen 6 bis 8 (siehe Tabelle 2) werden mit 70 Gew.-Teilen eines Styrol/Acrylnitril = 72:28-Copolymerharzes (M̅_{w}≈ 85 000), 2 Gew.-Teilen Ethylendiaminbisstearylamid und 0,1 Gew.-Teilen eines Silikonöls in einem Innenkneter vermischt und anschließend zu Prüfkörpern verarbeitet.
   Folgende Daten werden ermittelt :
   Kerbschlagzähigkeit bei Raumtemperatur (aₖ^{RT}) und bei -40°C (aₖ^{-40°C}) nach ISO 180/1A (Einheit : kJ/m²), MVR nach DIN 53735 U (Einheit : cm³/10 min).

   Die Geruchseigenschaften als Maß für einen vollständigen Einbau der molekulargewichtsregelnden Verbindung werden an spritzfrischen Formteilen gemäß der Abstufung
   ++ Kein wahrnehmbarer Geruch
   + Kaum wahrnehmbarer Geruch
   o Schwacher Geruch
   - Deutlicher Geruch
   - Starker Geruch
   beurteilt.

**Tabelle 2 : Zusammensetzungen der Formmassen**

| Beispiel Nr. | Pfropfpolymer aus Beispiel 1 (Gew.-Teile) | Pfropfpolymer aus Beispiel 2 (Gew.-Teile) | Pfropfpolymer aus Beispiel 3 (Gew.- Teile) | Pfropfpolymer aus Beispiel 4 (Gew.-Teile) | Pfropfpolymer aus Beispiel 5 (Gew.-Teile) | Pfropfpolymer aus Beispiel 6 (Gew.-Teile) | Pfropfpolymer aus Beispiel 7 (Gew.-Teile) | Pfropfpolymer aus Beispiel 8 (Gew.-Teile) | Styrol/ Acrylnitril-Copolymer M̅_{w} ≈ 115 000 (Gew.-Teile) | Styrol/ AcrylnitrilCopolymer M̅_{w} ≈ 85 000 (Gew.Teile) |
|---|---|---|---|---|---|---|---|---|---|---|
| 9 | 40 | -- | -- | -- | -- | -- | -- | -- | 60 | -- |
| 10 | -- | 40 | -- | -- | -- | -- | - | - | 60 | -- |
| 11 1 | -- | -- | 40 | -- | -- | -- | -- | -- | 60 | -- |
| 12(Vergl.) | -- | - | -- | 40 | -- | -- | -- | -- | 60 | -- |
| 13(Vergl.) | - | -- | -- | -- | 40 | --- | -- | -- | 60 | -- |
| 14 | 15 | -- | -- | -- | -- | 1$ | -- | -- | -- | 70 |
| 15 | -- | 15 | -- | -- | -- | -- | 15 | -- | -- | 70 |
| 16(Vergl.) | -- | -- | -- | 15 | -- | -- | -- | 15 | -- | 70 |

**Tabelle 3 : Ausprüfung der Formmassen**

| **Beispiel Nr.** | **aₖ^{RT} (kJ/m²)** | **aₖ^{-40°C} (kJ/m²)** | **MVR (cm³/10 min)** | **Geruchsverhalten** |
|---|---|---|---|---|
| 9 | 36,2 | 24,0 | 9,3 | ++ |
| 10 | 37,2 | 24,4 | 9,5 | + |
| 11 | 36,5 | 25,9 | 9,3 | 0 |
| 12 (Vergleich) | 35,3 | 23,5 | 9,0 | -- |
| 13 (Vergleich) | 34,4 | 23,0 | 8,8 | - |
| 14 | 19,0 | 10,9 | 36,6 | ++ |
| 15 | 18,1 | 10,5 | 37,3 | + |
| 16 (Vergleich) | 16,4 | 9,9 | 36,6 | -- |

Die in Tabelle 3 angegebenen Prüfwerte zeigen, daß die erfindungsgemäß hergestellten elastisch-thermoplastischen Pfropfpolymerisate zu kautschukmodifizierten thermoplastischen Formmassen mit verbesserten Werten für Zähigkeit und thermoplastische Verarbeitbarkeit sowie deutlich günstigerem Geruchsverhalten führen.

## Patentansprüche

1. Elastisch thermoplastische Pfropfpolymerisate erhalten durch radikalische Polymerisation eines oder mehrer vinylgruppenhaltigen Monomeren und mindestens einer molekulargewichtsregelnden Verbindung in Gegenwart mindestens eines in Latexform vorliegenden Kautschuks, **dadurch gekennzeichnet, daß** während der Pfropfpolymerisationsreaktion ein Gemisch aus Monomeren (M) und molekulargewichtsregelnder Verbindung (MGR) derart zum Kautschuklatex gegeben wird, daß das Gewichtsverhältnis M : MGR im ersten Reaktionsabschnitt (RA) 50 : 1 bis 400 : 1, im zweiten Reaktionsabschnitt 100 : 1 bis 800 : 1 und im dritten Reaktionsabschnitt 200 : 1 bis 2000 : 1 beträgt, in mindestens einem weiteren Reaktionsabschnitt zu Beginn und/oder am Ende der Pfropfpolymerisationsreaktion nur Monomere ohne Zusatz molekulargewichtsregelnder Verbindungen zum Kautschuklatex gegeben werden und die Bedingung M : MGR (erster RA) ≤ M : MGR (zweiter RA) < M : MGR (dritter RA) erfüllt ist.

2. Elastisch thermoplastische Pfropfpolymerisate gemäß Anspruch 1, **dadurch gekennzeichnet, daß** das Gewichtsverhältnis Monomer : Molekulargewichtsregler im ersten Reaktionsabschnitt 100 : 1 bis 300 : 1, im zweiten Reaktionsabschnitt 200 : 1 bis 600 : 1 und im dritten Reaktionsabschnitt 400 : 1 bis 1500 : 1 beträgt, in einem weiteren Reaktionsabschnitt zu Beginn und/oder am Ende der Pfropfpolymerisationsreaktion nur Monomere ohne Zusatz molekulargewichtsregelnder Verbindungen zum Kautschuklatex gegeben werden und die Bedingung M : MGR (erster RA) ≤ M : MGR (zweiter RA) < M : MGR (dritter RA) erfüllt ist.

3. Elastisch thermoplatische Pfropfpolymerisate gemäß Anspruch 1, **dadurch gekennzeichnet, dass** eine schwefelhaltige molekulargewichtsregelnde Verbindung verwendet wird.

4. Verfahren zur Herstellung von elastisch-thermoplastischen Pfropfpolymerisaten durch Umsetzung von einem oder mehreren vinylgruppenhaltigen Monomeren und mindestens einer molekulargewichtsregelnden Verbindung in Gegenwart mindestens eines in Latexform vorliegenden Kautschuks, **dadurch gekennzeichnet, daß** während der Pfropfpolymerisationsreaktion ein Gemisch aus Monomeren (M) und molekulargewichtsregelnder Verbindung (MGR) derart zum Kautschuklatex gegeben wird, daß das Gewichtsverhältnis M : MGR im ersten Reaktionsabschnitt (RA) 50 : 1 bis 400 : 1, im zweiten Reaktionsabschnitt 100 : 1 bis 800 : 1 und im dritten Reaktionsabschnitt 200 : 1 bis 2000 : 1 beträgt, in mindestens einem weiteren Reaktionsabschnitt zu Beginn und/oder am Ende der Pfropfpolymerisationsreaktion nur Monomere ohne Zusatz molekulargewichtsregelnder Verbindungen zum Kautschuklatex gegeben werden und die Bedingung M : MGR (erster RA) ≤ M : MGR (zweiter RA) <M : MGR (dritter RA) erfüllt ist.

5. Verfahren gemäß Anspruch 4, **dadurch gekennzeichnet, daß** das Gewichtsverhältnis Monomer : Molekulargewichtsregler im ersten Reaktionsabschnitt 100 : 1 bis 300 : 1, im zweiten Reaktionsabschnitt 200 : 1 bis 600 : 1 und im dritten Reaktionsabschnitt 400 : 1 bis 1500 : 1 beträgt, in einem weiteren Reaktionsabschnitt zu Beginn und/oder am Ende der Pfropfpolymerisationsreaktion nur Monomere ohne Zusatz molekulargewichtsregelnder Verbindungen zum Kautschuklatex gegeben werden und die Bedingung M : MGR (erster RA) ≤ M : MGR (zweiter RA) < M : MGR (dritter RA) erfüllt ist.

6. Verfahren gemäß Anspruch 1 bis 5, wobei die molekulargewichtsregelnde Verbindung schwefelhaltig ist.

7. Zusammensetzungen, enthaltend mindestens ein elastisch-thermoplastisches Pfropfpolymerisat gemäß der Ansprüche 1 bis 6.

8. Zusammensetzungen gemäß Anspruch 7, enthaltend mindestens ein Copolymerisat aus Styrol und Acrylnitril, wobei Styrol und/oder Acrylnitril ganz oder teilweise durch α-Methylstyrol, Methylmethacrylat oder N-Phenylmaleinimid ersetzt werden kann.

9. Zusammensetzungen gemäß der Ansprüche 7 oder 8, enthaltend mindestens ein Thermoplastharz ausgewählt aus thermoplastischen Polycarbonaten, thermoplastischen Polyestercarbonaten, thermoplastischen Polyestern, thermoplastischen Polyamiden oder Mischungen hieraus.

10. Zusammensetzungen gemäß Anspruch 7 bis 9, enthaltend 1 bis 80 Gew.-% Pfropfpolymerisate gemäß Anspruch 1 bis 6.

11. Verwendung der Zusammensetzungen nach einem oder mehreren der vorstehenden Ansprüche zur Herstellung von Formkörpern.

12. Formkörper erhältlich aus Zusammensetzungen nach einem oder mehreren der vorstehenden Ansprüche.

## Claims

1. Elastic-thermoplastic graft polymers obtained by free radical polymerization of one or more vinyl-containing monomers and at least one molecular weight regulating compound in the presence of at least one rubber in latex form, **characterized in that**, during the graft polymerization reaction, a mixture of monomers (M) and molecular weight regulating compound (MWR) is added to the rubber latex such that the weight ratio of M:MWR in a first reaction section (RS) is 50:1 to 400:1, in a second reaction section is 100:1 to 800:1 and in a third reaction section is 200:1 to 2000:1, in at least one further reaction section at the beginning and/or at the end of the graft polymerization reaction only monomers are added to the rubber latex, without the addition of compounds which regulate the molecular weight, and the condition M:MWR (first RS) ≤ M:MWR (second RS) < M:MWR (third RS) is satisfied.

2. Elastic-thermoplastic graft polymers according to Claim 1, **characterized in that** the weight ratio of monomer:molecular weight regulator in the first reaction section is 100:1 to 300:1, in the second reaction section is 200:1 to 600:1 and in the third reaction section is 400:1 to 1500:1, in a further reaction section at the beginning and/or at the end of the graft polymerization reaction only monomers are added to the rubber latex, without the addition of compounds which regulate the molecular weight, and the condition M:MWR (first RS) ≤ M:MWR (second RS) < M:MWR (third RS) is satisfied.

3. Elastic-thermoplastic graft polymers according to Claim 1, **characterized in that** a sulphur-containing molecular weight regulating compound is used.

4. Process for preparing elastic-thermoplastic graft polymers by reaction of one or more vinyl-containing monomers and at least one molecular weight regulating compound in the presence of at least one rubber in latex form, **characterized in that**, during the graft polymerization reaction, a mixture of monomers (M) and molecular weight regulating compound (MWR) is added to the rubber latex such that the weight ratio of M:MWR in a first reaction section (RS) is 50:1 to 400:1, in a second reaction section is 100:1 to 800:1 and in a third reaction section is 200:1 to 2000:1, in at least one further reaction section at the beginning and/or at the end of the graft polymerization reaction only monomers are added to the rubber latex, without the addition of compounds which regulate the molecular weight, and the condition M:MWR (first RS) ≤ M:MWR (second RS) < M:MWR (third RS) is satisfied.

5. Process according to Claim 4, **characterized in that** the weight ratio of monomer:molecular weight regulator in the first reaction section is 100:1 to 300:1, in the second reaction section is 200:1 to 600:1 and in the third reaction section is 400:1 to 1500:1, in a further reaction section at the beginning and/or at the end of the graft polymerization reaction only monomers are added to the rubber latex, without the addition of compounds which regulate the molecular weight, and the condition M:MWR (first RS) ≤ M:MWR (second RS) < M:MWR (third RS) is satisfied.

6. Process according to Claim 1 to 5, wherein the molecular weight regulating compound is sulphur containing.

7. Compositions comprising at least one elastic-thermoplastic graft polymer according to Claims 1 to 6.

8. Compositions according to Claim 7, comprising at least one copolymer of styrene and acrylonitrile, although styrene and/or acrylonitrile can be wholly or partly replaced by α-methylstyrene, methyl methacrylate or N-phenylmaleimide.

9. Compositions according to Claims 7 or 8, comprising at least one thermoplastic resin selected from thermoplastic polycarbonates, thermoplastic polyester-carbonates, thermoplastic polyesters, thermoplastic polyamides and mixtures thereof.

10. Compositions according to Claim 7 to 9, comprising 1% to 80% by weight of graft polymers according to Claim 1 to 6.

11. Use of the compositions according to one or more of the preceding claims for preparing shaped articles.

12. Shaped articles obtainable from compositions according to one or more of the preceding claims.

## Revendications

1. Polymères greffés élastico-thermoplastiques obtenus par polymérisation par voie radicalaire d'un ou de plusieurs monomères contenant des groupes vinyle et d'au moins un composé régulant le poids moléculaire en présence d'au moins un caoutchouc se trouvant sous forme d'un latex, **caractérisés en ce qu'**on ajoute, pendant la réaction de polymérisation par greffage, un mélange de monomères (M) et de composé régulant le poids moléculaire (RPM) au latex de caoutchouc de manière telle que le rapport pondéral M:RPM dans la première section de réaction (SR) est de 50:1 à 400:1, dans la deuxième section de réaction il est de 100:1 à 800:1 et dans la troisième section de réaction il est de 200:1 à 2 000:1, dans au moins une autre section de réaction, au début et/ou à la fin de la réaction de polymérisation par greffage, on n'ajoute que des monomères sans addition de composés régulant le poids moléculaire au caoutchouc de latex et on respecte la condition M:RPM (première SR) ≤ M:RPM (deuxième SR) < M:RPM (troisième SR).

2. Polymères greffés élastico-thermoplastiques selon la revendication 1, **caractérisés en ce que** le rapport pondéral monomère : régulateur de poids moléculaire dans la première section de réaction est de 100:1 à 300:1, dans la deuxième section de réaction il est de 200:1 à 600:1 et dans la troisième section de réaction il est de 400:1 à 1 500:1, dans une autre section de réaction au début et/ou à la fin de la réaction de polymérisation par greffage, on n'ajoute que des monomères sans addition de composés régulant le poids moléculaire au latex de caoutchouc et la condition M:RPM (première SR) ≤ M:RPM (deuxième SR) < M:RPM (troisième SR) est remplie.

3. Polymères greffés élastico-thermoplastiques selon la revendication 1, **caractérisés en ce qu'**on utilise un composé régulant le poids moléculaire contenant du soufre.

4. Procédé pour la préparation de polymères greffés élastico-thermoplastiques par transformation d'un ou de plusieurs monomères contenant des groupes vinyle et d'au moins un composé régulant le poids moléculaire en présence d'au moins un caoutchouc se trouvant sous forme d'un latex, **caractérisé en ce qu'**on ajoute, pendant la réaction de polymérisation par greffage, un mélange de monomères (M) et de composé régulant le poids moléculaire (RPM) au latex de caoutchouc de manière telle que le rapport pondéral M:RPM dans la première section de réaction (SR) est de 50:1 à 400:1, dans la deuxième section de réaction il est de 100:1 à 800:1 et dans la troisième section de réaction il est de 200:1 à 2 000:1, dans au moins une autre section de réaction, au début et/ou à la fin de la réaction de polymérisation par greffage, on n'ajoute que des monomères sans addition de composés régulant le poids moléculaire au caoutchouc de latex et on respecte la condition M:RPM (première SR) ≤ M:RPM (deuxième SR) < M:RPM (troisième SR).

5. Procédé selon la revendication 4, **caractérisé en ce que** le rapport pondéral monomère : régulateur de poids moléculaire dans la première section de réaction est de 100:1 à 300:1, dans la deuxième section de réaction il est de 200:1 à 600:1 et dans la troisième section de réaction il est de 400:1 à 1 500:1, dans une autre section de réaction au début et/ou à la fin de la réaction de polymérisation par greffage, on n'ajoute que des monomères sans addition de composés régulant le poids moléculaire au latex de caoutchouc et la condition M:RPM (première SR) ≤ M:RPM (deuxième SR) < M:RPM(troisième SR) est remplie.

6. Procédé selon la revendication 1 à 5, le composé régulant le poids moléculaire contenant du soufre.

7. Compositions contenant au moins un polymère greffé élastico-thermoplastique selon les revendications 1 à 6.

8. Compositions selon la revendication 7, contenant au moins un copolymère de styrène et d'acrylonitrile, le styrène et/ou l'acrylonitrile pouvant être remplacé totalement ou partiellement par de l'α-méthylstyrène, du méthacrylate de méthyle ou du N-phénylmaléinimide.

9. Compositions selon les revendications 7 ou 8, contenant au moins une résine thermoplastique choisie parmi les polycarbonates thermoplastiques, les polyestercarbonates thermoplastiques, les polyesters thermoplastiques, les polyamides thermoplastiques ou les mélanges de ceux-ci.

10. Compositions selon la revendication 7 à 9, contenant 1 à 80% en poids de polymères greffés selon la revendication 1 à 6.

11. Utilisation des compositions selon l'une ou plusieurs des revendications précédentes pour la préparation de corps façonnés.

12. Corps façonnés pouvant être obtenus à partir des compositions selon l'une ou plusieurs des revendications précédentes.
